# EUROPÄISCHE PATENTSCHRIFT

(11) **EP 2 141 011 B1**
(45) Veröffentlichungstag und Bekanntmachung des Hinweises auf die Patenterteilung: **10.04.2013**
(21) Anmeldenummer: 09009974.8
(22) Anmeldetag: 03.08.2007
(51) Int. Cl.: B32B 5/26, B29C 70/22, D04H 3/04

(54) **Verfahren zur Verbesserung des Transportes eines multiaxialen Geleges während der Herstellung**
Method for improving the transport of a multiaxial clutch during production
Procédé d'amélioration du transport d'une structure multiaxiale lors de la fabrication

(30) Priorität: 04.08.2006 DE 102006036866; 05.09.2006 DE 102006042047; 05.12.2006 DE 102006057633; 05.12.2006 DE 102006057634; 05.12.2006 DE 102006057635; 05.12.2006 DE 102006057636; 14.02.2007 DE 102007007919
(43) Veröffentlichungstag der Anmeldung: 06.01.2010
(62) Teilanmeldung aus: 07785685.4
(73) Patentinhaber: Fibraforce AG, 5453 Remetschwil (CH)
(72) Erfinder: Szukat, Klaus, 03792 Parcent (ES); Scholten, Friedhelm, 47198 Duisburg (DE)
(74) Vertreter: Demski, Siegfried

(56) Entgegenhaltungen:
- DE-A1- 2 237 335
- DE-A1-102005 000 115

## Beschreibung

Die Erfindung betrifft ein Verfahren zur Herstellung eines multiaxialen Geleges bevorzugt aus Kohlefaserstoffen, in welchem ein monoaxiales Gelege von mindestens einer Bevorratung um eine Wickelebene gewickelt wird, wobei die Wickelebene und die mindestens eine Bevorratung um einander rotieren, um das monoaxiale Gelege um die Wickelebene zu wickeln und eine korrespondierende Vorrichtung zur Durchführung des erfindungsgemäßen Verfahrens.

Langfaserverstärkte Faserverbundbauteile sind ein wichtiges Anwendungsgebiet für technische Textilien. Aufbau und Struktur des Verstärkungstextiles bestimmen im Zusammenspiel mit der Herstellungstechnologie sowie dem verwendeten Matrixmaterial maßgeblich die Eigenschaft des späteren Verbundbauteils. Multiaxiale Gelege, auch MD- oder multidirektionale Gelege genannt, spielen dabei eine besondere Rolle, denn sie erlauben im Vergleich zu anderen Textilien Flächenkonstruktionen, die eine höhere Ausnutzung der spezifischen Eigenschaften der verwendeten Fasern bei gleichzeitiger Reduzierung der Herstellungs- und damit Bauteilkosten bieten.

Zur Herstellung von multiaxialen Gelegen wird auf verschiedene Techniken zurückgegriffen. Eine naheliegende Technologie ist der Rückgriff auf ein webähnliches Verfahren, in dem ein Schussfaden unter einem Winkel zur Erstreckungsrichtung der Gelegebahn gelegt wird. Dieses Verfahren ist jedoch langsam und erlaubt bei den feinen Fasern eine nur geringe Herstellungsgeschwindigkeit. Wesentlich schneller zur Herstellung hat sich ein Verfahren herausgestellt, in welchem uniaxiale Gelege, auch UD oder unidirektionale Gelege genannt, durch Wickeln um eine Ebene zu einem multiaxialen Gelege umgeformt werden.

In der Offenlegungsschrift DE 10 2005 000 115 A1 wird ein Verfahren zur Herstellung einer multidirektionalen Gelegebahn offenbart, wobei in diesem Verfahren um ein Gelege, dessen Fasern in Erstreckungsrichtung der Gelegebahn ausgerichtet sind, zwei weitere Bahnen mit einem Winkel zur Erstreckungsrichtung gewickelt werden, wobei ein multiaxiales Gelege entsteht. Dieses multiaxiale Gelege weist somit mindestens drei Schichten auf. Diese sind die beiden gegenüber liegenden Schichten des unter einem Winkel gewickelten Geleges und die sogenannte Null-Grad-Bahn, welche Fasern in Erstreckungsrichtung der Gelegebahn aufweist. Ein derartiges Gelege weist positive Eigenschaften in Bezug auf Zugfestigkeit auf.

Die japanische Patentanmeldung JP 2003 221771A betrifft ein Verfahren zur Herstellung einer multiaxialen Gelegebahn offenbart, in welchem ausschließlich die unter einem Winkel gewickelten Gelegebahnen um zwei etwa handbreite Bänder gewickelt werden, die in dem Gelege verbleiben. Durch dieses Verfahren entsteht ein multiaxiales Gelege, welches verstärkte Ränder aufweist. Die verstärkten Ränder haben einerseits den Vorteil, dass hierdurch das Gelege gerade an den Rändern eine hohe Zähigkeit oder eine hohe Stabilität aufweist, auf der anderen Seite hat dieses Gelege den Nachteil, dass durch die an den Rändern erhöhe Stärke des Materials das Material nicht stabil auf eine Rolle gewickelt werden kann und andererseits ist es hierdurch nicht möglich, gleichmäßige Schichtdicken eines faserverstärkten Kunststoffes aufzubauen, da die seitlichen Bänder das Gelege unnötig in seiner Stärke erhöhen.

Zur Herstellung von faserverstärkten Kunststoffen werden Gelege aus Fasern verwendet, die mit einem Kunststoff umgossen werden. Der Verbund aus Kunststoff und den Fasern verleiht dabei dem faserverstärkten Kunststoff eine hohe Stabilität gegenüber Zugspannung, wobei die Zugspannungsstabilität von der Ausrichtung der in dem Gelege vorhandenen Fasern abhängig ist. Faserverstärkte Kunststoffe werden vor allem dort eingesetzt, wo eine hohe Belastbarkeit in Kombination mit geringem Gewicht gefordert ist, wie beispielweise im Flugzeug- oder Schiffsbau. Um faserverstärkten Kunststoff mit einem möglichst geringen Gewicht auszustatten, ist es notwendig, die Menge des auf die Faser aufgetragenen Kunststoffes so gering wie möglich zu halten, wobei der Kunststoff die Fasern vollständig umschließen soll. Bei der Verwendung von gewebten Fasern trägt die Faserschicht im Vergleich zur Stärke der Fasern relativ stark auf und hat dadurch einen erhöhten Kunststoffanspruch, der zu einem faserverstärkten Kunststoffbauteil mit hoher Schichtdicke führt und daher ein hohes Gewicht aufweist. In der Praxis ist man daher dazu übergegangen, Gelege aus Fasermaterialien zu verwenden, in welchen die einzelnen Fasern gleichmäßig angeordnet sind und sich gegenseitig nicht überkreuzen, um damit eine Erhöhung der Schichtdicke des Fasermaterials und damit den Kunststoffanspruch des Fasermaterials möglichst gering zu halten. Da bekannt ist, dass der Kunststoff nur in der Faserrichtung eine hohe Zugfestigkeit aufweist, werden multiaxiale Gelege verwendet, in welchem die Fasern in mehreren Ebenen gelegt sind, wobei in jeder Ebene die Fasern eine Vorzugsrichtung aufweisen und sich gegenseitig nach Möglichkeit nicht überkreuzen. Das einfachste so hergestellte multiaxiale Gelege ist ein Gelege, in dem zwei Bahnen einer Faseranordnung überkreuzt übereinander gelegt werden. Derartige Gelege werden dadurch hergestellt, in dem entweder Teile einer Gelegebahn unter einem Winkel zur Bahn einzeln aneinander gelegt werden, wobei zunächst eine untere und darauf folgend eine obere Schicht aus einzelnen Teilen zusammengelegt wird. Hierbei werden einzelne, aus Parallelogrammen bestehende Einzelteile zu langen Bahnen zusammengelegt. Dieses Verfahren ist jedoch nicht geeignet, größere Mengen, so wie sie in industriellen Fertigungsprozessen benötigt werden, wirtschaftlich herzustellen.

In einem anderen Verfahren ist man daher dazu übergegangen, eine oder zwei Bahnen unter einem Winkel um eine Platte zu wickeln und den so entstandenen Wickel von einer Platte abzuziehen. Dieser Prozess kann kontinuierlich durchgeführt werden, wobei der Wickel von der Platte abgezogen und im Anschluss daran zu einem Gelege verdichtet wird. Ein derartiges Verfahren hat sich in der Praxis als schwer beherrschbar herausgestellt, vor allem, wenn wie im Fall von Kohlefasern, die Fasern ein nahezu fließendes Verhalten aufweisen. Dies bedeutet, dass die Fasern aufgrund ihres geringen Gewichtes und ihrer geringen Reibung auf Oberflächen leicht zusammenfallen und somit der Ausbildung einer gleichmäßig geformten Gelegebahn entgegenwirken. Je fluider das Verhalten eines Geleges, desto schwieriger ist dabei die Herstellung eines gleichmäßig geformten multiaxialen Geleges. Beim Wickeln um die Platte ist es erforderlich, dass das Gelege, das zu unterst auf der Platte liegt, beim kontinuierlichen Abziehen von der Platte nicht dazu neigt, dass die einzelnen Fasern von der Platte abrollen und somit einen Drall aufweisen, der nach dem Abziehen des Geleges dazu führt, dass sich die Fasern verkreuseln oder überkreuzen. Die Überkreuzung macht das Gelege qualitativ schlechter bis unbrauchbar im Vergleich mit einem gleichmäßig geformten multiaxialen Gelege, in welchem keine Überkreuzungen vorkommen. Das Abrollen der Fasern entsteht vor allem dann, wenn das Gelege vergleichsweise stark gespannt auf der Wickelplatte aufgewickelt wird. Wird das Gelege hingegen locker um die Platte gelegt, so haben die einzelnen Fasern die Möglichkeit, beim Abgleiten von der Platte einander zu überkreuzen oder Schleifen auszubilden. Auch dieses führt zu einem qualitativ schlechteren oder unbrauchbaren Ergebnis.

Aufgabe der Erfindung ist es ein Verfahren zur Herstellung eines multiaxialen Geleges und eine dazu korrespondierende Vorrichtung zur Verfügung zu stellen, welche die Nachteile aus dem Stand der Technik überwindet.

Die Aufgabe wird erfindungsgemäß durch eine Verwendung eines Vibrationsantriebes gelöst, der die Wickelebene in mechanische Schwingungen versetzt. Weitere vorteilhafte Ausgestaltungen der Erfindung ergeben sich aus den Unteransprüchen.

In dem Verfahren zur Herstellung eines multiaxialen Geleges wird ein monoaxiales Gelege von einer Bevorratung, bevorzugt in Form einer Rolle, abgewickelt und unter einem Winkel um eine Wickelebene gewickelt. Hierzu rotiert die Wickelebene und die mindestens eine Bevorratung umeinander, sodass das monoaxiale Gelege von der Bevorratung um die Wickelebene gewickelt wird. Um das gewickelte Gelege von der Wickelebene abziehen zu können, ist erfindungsgemäß vorgesehen, einen Vibrationsantrieb zu verwenden, der die Wickelebene in mechanische Schwingung versetzt. Die Schwingungen sind dabei von geringer Amplitude und vergleichsweise hoher Frequenz. Dabei ist in einer bevorzugten Ausführungsform vorgesehen, dass die durch die Schwingung erzeugte Vibration parallel zur Richtung der Seitenkanten einen bestimmten Profil im Ort-Zeit-Diagramm folgt, damit die einzelnen Fasern in eine Vorzugsrichtung transportiert werden. Es ist auch möglich, die Vibration in anderen Richtungen in Bezug auf die Seitenkanten der Wickelebene auszuführen. Wird die mechanische Schwingung ohne Vorzugsrichtung ausgeübt, so befindet sich die um die Wickelebene gelegte Faser zu großen Teilen der Zeit nicht in direktem Kontakt mit der Wickelebene, weil sie durch die mechanischen Schwingungen von der Wickelebene abgestoßen wird. Innerhalb dieser kurzen Zeit ist es möglich, das Gelege mit geringem Reibungswiderstandstand von der Platte abzuziehen. Dabei ist es unerheblich, dass nicht alle Fasern zur gleichen Zeit von der Wickelebene abgehoben sind, denn durch die Vibration wird die mittlere Reibung erheblich vermindert. Wird hingegen die Schwingung parallel zu den Seitenflächen der Wickelebene ausgeführt, so ist es durch eine bestimmte Art der Vibrationsführung möglich, die einzelnen Fasern der Gelegebahnen mit einer Vorzugsrichtung zu transportieren. Wird der Wickeltisch mit hoher Frequenz, kurzer Amplitude und ohne bestimmte Vorzugsrichtungen in Schwingung versetzt, lässt sich das Gelege mit geringem Widerstand von der Platte abziehen. Wird die Frequenz hingegen so an die Reibung des Geleges auf der Wickelebene angepasst, dass durch eine langsame Bewegung in Abzugsrichtung die Faser durch den Reibungswiderstand transportiert wird und durch eine schnelle Rückwärtsbewegung der Reibungswiderstand von einer Haftreibung in eine Gleitreibung übergeht, wobei die Trägheit der Fasern ein schnelles Zurückgleiten der Fasern auf der Wickelebene verhindert, dann wird das Gelege in Abzugsrichtung transportiert. Durch die beiden unterschiedlichen Geschwindigkeiten der mechanischen Schwingungen in Abzugs- und in Rückrichtung wird ein Transport der Fasern erreicht. Beim Schwingen in die Abzugsrichtung bewegt sich die Wickelebene langsam nach vorne. Während dieser langsamen Bewegung befindet sich die Faser auf der Oberfläche der Wickelebene in Haftreibung und wird dadurch durch die Platte nach vorne geschoben. Bei der schnellen Rückbewegung der Wickelebene geht die Faser von einem Haftreibungszustand in den Gleitreibungszustand über, wobei sich die Wickelebene unterhalb der Faser zurück bewegt, ohne das die Faser dieser Rückbewegung folgt. Auf diese Weise wird das gesamte Gelege gleichmäßig nach vorne transportiert. Vorteilhaft an den Vibrationsantrieb ist, dass trotz der nicht vermeidbaren Reibung des Geleges auf der Wickelebene das Gelege über die Wickelebene transportiert wird, ohne dass dabei die einzelnen Fasern zur Überkreuzung neigen und auf diese Weise kann ein gleichmäßiges Gelege hergestellt werden.

Es ist also möglich, durch eine ungerichtete Vibration einen reibungsarmen Zustand des Geleges auf der Wickelebene zu erzeugen und es ist möglich, durch eine gerichtete Vibration mit unterschiedlichen Geschwindigkeiten in unterschiedliche Schwingungsrichtungen eine gerichtete Vibration zu erzeugen, die dazu führt, dass die Faser in die Vorzugsrichtung transportiert wird. Die gerichtete Vibration ist geeignet für solche Verfahren und Vorrichtungen zur Herstellung eines multiaxialen Geleges, in dem das multiaxiale Gelege von der Wickelebene abgezogen wird. Hingegen ist die gerichtete Vibration für solche Verfahren und Vorrichtungen geeignet, in der das multiaxiale Gelege nicht durch eine weitere Vorrichtung von der Wickelebene abgezogen wird oder durch Schwerkraft von der Wickelebene herab geleitet, sondern das Gelege wird durch die Vibration vorgetrieben.

In vorteilhafter Weise des erfindungsgemäßen Verfahrens wird ein Vibrationsabtrieb verwendet, der mechanische Schwingungen mit im Wesentlichen sägezahnartigen Charakter in Bezug auf das Ort-Zeit-Diagramm erzeugt. Dabei ist die steilere Flanke der Schwingungsbewegung im Ort-Zeit-Diagramm gegen die Richtung der Abzugrichtung des Geleges gerichtet und die weniger steilere Flanke der Schwingungsbewegung im Ort-Zeit-Diagramm in Richtung der Abzugsrichtung des Geleges gerichtet. Durch diesen sägezahnartigen Charakter in Bezug auf das Ort-Zeit-Diagramm wird in vorteilhafter Weise ein Transport der Fasern auf der Wickelebene erreicht, sodass eine weitere Vorrichtung zum Abziehen des Geleges vermeidbar ist.

Um den Reibungswiderstand der Fasern auf der Wickelebene einzustellen, ist es möglich, die Wickelebene einer Feinstrukturierung zu unterziehen. Durch die Feinstrukturierung kann ein definierter Reibungswiderstand der Fasern auf dem Gelege erreicht werden, sodass hierdurch die Schwingungsamplitude und Schwingungsfrequenz eingestellt werden kann. Beispielsweise ist es hierdurch möglich, die Schwingungen mit geringerer Frequenz und geringerer Amplitude einzustellen, die notwendig ist für eine gleichmäßige Vorwärtsbewegung der einzelnen Fasern. Durch die geringere Amplitude und die geringere Frequenz ist ein wesentlich verschleißärmerer Aufbau der Vorrichtung zur Durchführung des erfindungsgemäßen Verfahrens möglich und die Vorrichtung benötigt weniger Energie, um die Wickelebene in Schwingung zu versetzen. Des Weiteren ist es möglich, das Gewicht und die Elastizität der Wickelebene so zu wählen, dass die Resonanzfrequenz der Wickelebene exakt der Frequenz entspricht, die für den Transport der Fasern auf der Wickelebene notwendig ist. Der Fachmann ist hier frei, durch Experimentieren die richtigen Parameter für die Feinstrukturierung, des Gewichts, die Elastizität, die Frequenz und die Amplitude der Schwingungen einzustellen.

In vorteilhafter Ausgestaltung der Erfindung ist die Vortriebsgeschwindigkeit der Fasern des Geleges auf der Wickelebene durch den Vibrationsantrieb mit der relativen Umdrehungsgeschwindigkeit der Bevorratung um die Wickelebene synchronisiert. Dabei wird während der Zeit einer halben relativen Umdrehung der Bevorratungen um die Wickelebene das Gelege um den Tangens des Wickelwinkels α, der zwischen der Ausrichtung der Seitenkanten der Wickelebene und der Ausrichtung der Fasern des monoaxialen Geleges gemessen wird, multipliziert mit der Breite der Wickelebene vorgetrieben. Durch die Synchronisation der Vortriebsgeschwindigkeit mit der relativen Umdrehung der Bevorratung um Wickelebene wird erreicht, dass ein kontinuierlicher Wickelprozess stattfindet, in welchem die Gelegebahn ohne Ausbildung einer Wickelnaht ein multiaxiales Gelege ausbildet.

Da die Wickelebene eine endliche Stärke aufweist, wird es gegebenenfalls notwendig sein, die Vortriebsgeschwindigkeit durch den Vibrationsantrieb während des Wickelvorgangs zu variieren. Während des Wickelvorganges werden die monoaxialen Fasern durch zwei verschiedene Kantentypen in Bezug auf die Rotation gespannt. Einmal werden die monoaxialen Fasern während einer viertel und relativen Umdrehung durch eine Kante gespannt, sodass sich die Fasern des monoaxialen Geleges auf eine Oberbeziehungsweise eine Unterfläche der Wickelebene legen und einmal werden die Fasern während einer viertel und relativen Umdrehung des monoaxialen Geleges durch eine Kante gespannt, sodass sich die Fasern des monoaxialen Geleges auf eine schmale Seitenkante der Wickelebene legen. Damit der Vortrieb stets synchronisiert ist und sich keine Wickelnähte ausbilden, ist es mithin notwendig, den Vortrieb durch den Vibrationsantrieb mit den unterschiedlichen Spannungszuständen der Fasern des monoaxialen Geleges zu synchronisieren. Dabei ist der Vibrationsantrieb während der Wicklung auf die Ober- beziehungsweise Unterfläche schneller einzustellen als wenn die Fasern auf die Seitenflächen der Wickelebene gewickelt werden. Somit wird die Vortriebsgeschwindigkeit durch den Vibrationsantrieb während einer relativen Umdrehung der mindestens einen Bevorratung um die Wickelebene variiert. Die Vortriebsgeschwindigkeit wird an das Produkt aus dem Tangens des Wickelwinkels α, der zwischen der Ausrichtung der Seitenkanten der Wickelebene und der Ausrichtung der Fasern des monoaxialen Geleges gemessen wird, und der Breite der Wickelebene pro viertel Umdrehung der Wickelebene angepasst, wenn die Fasern des monoaxialen Geleges durch eine Seitenkante der Wickelebene gespannt sind und auf eine Fläche der Wickelebene gewickelt werden. Hingegen wird die Vortriebsgeschwindigkeit an das Produkt aus dem Tangens der Wickelwinkels, der zwischen der Ausrichtung der Seitenkanten der Wickelebene und der Ausrichtung der Fasern des monoaxialen Geleges gemessen wird und der Stärke der Wickelebene pro viertel Umdrehung der Wickelebene angepasst, wenn die Fasern des monoaxialen Geleges durch eine Seitenkante der Wickelebene gespannt sind und auf eine Seitenkante der Wickelebene gewickelt werden.

In Vorteilhafterweise des erfindungsgemäßen Verfahrens wird eine Frequenz der Schwingung von 1 HZ bis 500 HZ gewählt, bevorzugt von 2 HZ bis 100 HZ, besonders bevorzugt von 3 HZ bis 50 HZ, und ganz bevorzugt von 5 HZ bis 50 HZ.

Dabei wird in Vorteilhafterweise eine Amplitude der Schwingung von 0,001 cm bis 10 cm, bevorzugt von 0,01 cm bis 5 cm, besonders bevorzugt von 0,1 cm bis 1 cm und ganz besonders bevorzugt von 0,2 cm bis 0,5 cm gewählt.

Die Erfindung wird anhand der folgenden Figur näher erläutert.

Es zeigen
- Fig. 17: eine skizzenhafte Darstellung einer Vorrichtung zur Durchführung des erfindungsgemäßen Verfahrens,
- Fig. 18: ein Ort-Zeit-Diagramm und ein Geschwindigkeitsdiagramm einer Schwingung und
- Fig. 19: eine teilweise umwickelte Wickelebene mit eingezeichneten Geschwindigkeitsvektoren der Schwingungen.

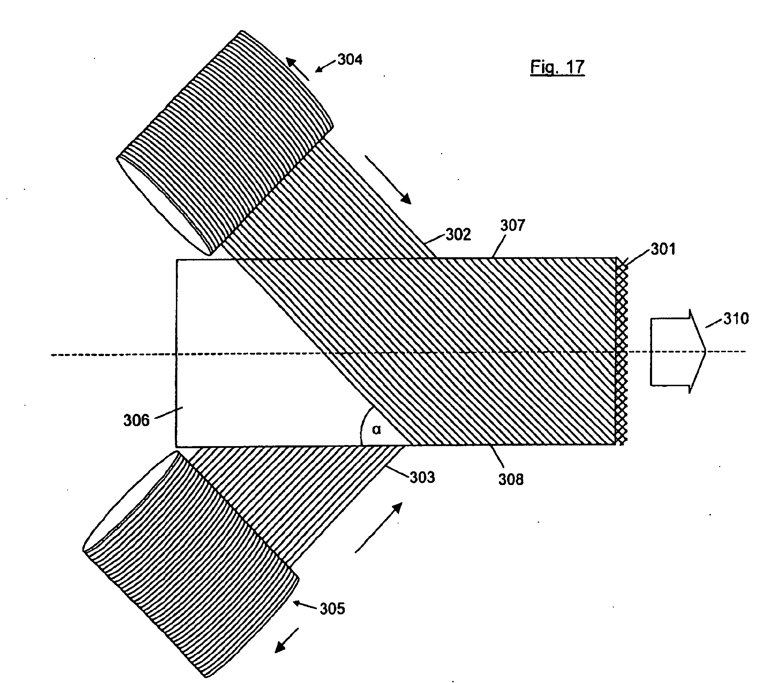

In Figur 17 ist eine skizzenhafte Darstellung einer Vorrichtung gezeigt, in der ein multiaxiales Gelege 301 aus zwei monoaxialen Gelegen 302 und 303 erzeugt wird. Von zwei Bevorratungen 304 beziehungsweise 305 hier in Form von Rollen, werden die monoaxialen Gelege 302 und 303 um eine Wickelebene 306 unter einem Winkel α gewickelt, wobei der Winkel α durch die Seitenkanten 307 und 308 der Wickelebene 306 und der Ausrichtung der Fasern des monoaxialen Geleges 302 und 303 aufgespannt wird. In dem erfindungsgemäßen Verfahren rotieren die beiden Bevorratungen 304 und 305 um die Wickeleben 306 oder die Wickelebene 306 rotiert, ohne dass die beiden Bevorratungen 304 und 305 ihre Position ändern. Während des Wickelvorganges wird das multiaxiale Gelege 301 von der Wickelebene 306 in Abzugsrichtung 310 abgezogen, sodass das multiaxiale Gelege 301 in einem kontinuierlichen Prozess aus den beiden monoaxialen Gelege 302 und 303 gebildet wird. Wird die Wickelebene 306 in mechanische Schwingung versetzt, so weist das Gelege auf der Wickelebene 306 einen sehr geringeren Widerstand auf und wenn die Vibration eine Vorzugsrichtung aufweist, dann wird das Gelege durch die Vibration mit Vorzugsrichtung in Abzugsrichtung 310 transportiert, sodass ein Abziehen des multiaxialen Geleges durch eine weitere Vorrichtung nicht notwendig ist.

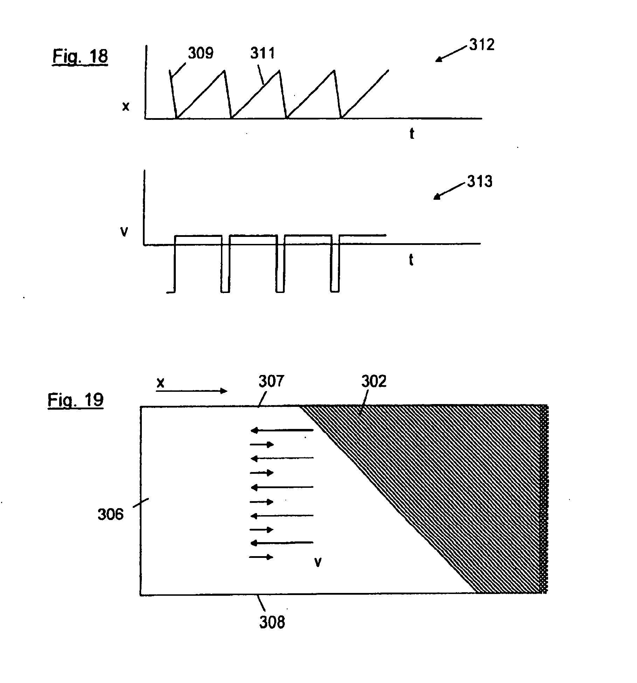

In Figur 18 ist ein Ort-Zeit-Diagramm 312 und ein dazu korrespondierendes Geschwindigkeitsdiagramm 313 einer Vibration mit Vorzugsrichtungen dargestellt. Dass Ort-Zeit-Diagramm 312 stellt den Ort in Abhängigkeit von der Zeit bei einer Vibration dar. Dabei weist der Verlauf des Ortes entlang der Zeit eine kurze Flanke 309 und eine lange Flanke 311 auf. Die kurze Flanke 309 ist gleichbedeutend mit einer schnellen Rückwärtsbewegung; hingegen ist die weniger steilerer Flanke 311 stellvertretend für eine langsamere Vorwärtsbewegung. Die beiden Bewegungen sind in den Geschwindigkeitsdiagramm 313 korrespondierend zu dem Ort-Zeit-Diagramm 312 dargestellt. Dort wo die steile Flanke 309 ist, ist im Geschwindigkeitsdiagramm eine negative Geschwindigkeit dargestellt und dort, wo die weniger steile Flanke 311 ist, ist im Geschwindigkeitsdiagramm eine geringere aber positive Geschwindigkeit dargestellt. Das Ort-Zeit-Diagramm weist dabei einen sägezahnartigen Charakter auf, in welchem die Flanken 309 und 311 durch ihre unterschiedliche Steigung die Form von Sägezähnen darstellen.

In Figur 19 ist die Wickelebene 306 mit teilweise umwickelten monoaxialen Fasern 302 dargestellt, wobei die in Figur 19 dargestellte Wickelebene 306 Vibrationen parallel zu den Seitenkanten 307 und 308 durchführt. Die Vibrationen sind in Figur 19 dargestellt durch längere Pfeile entgegen der Abzugsrichtung nach links und durch kürzere Pfeile in Abzugsrichtung nach rechts. Ein längerer Pfeil repräsentiert dabei eine höhere Geschwindigkeit und ein kürzerer Pfeil repräsentiert dabei eine geringere Geschwindigkeit. Durch die Abfolge von höherer Geschwindigkeit nach links und geringerer Geschwindigkeit nach rechts wechseln die Fasern des monoaxialen Geleges 302 zwischen Haft- und Gleitreibung, wobei die Fasern durch die Haftreibung bei geringerer Geschwindigkeit auf der Wickelebene 306 verbleiben und somit nach rechts transportiert werden und bei höherer Geschwindigkeit entgegen der Abzugsrichtung 310 nach links in die Gleitreibung übergehen und somit der Wickelplatte nicht einer Rückbewegung folgen. Auf diese Weise werden die einzelnen Fasern des monoaxialen Geleges 302 langsam nach rechts in die Abzugsrichtung 310 transportiert.

Die vorbeschriebenen Ausführungsbeispiele dienen der Erläuterung und sind nicht beschränkend.

### Bezugszeichenliste

- 301: multiaxiales Gelege
- 302: monoaxiales Gelege
- 303: monoaxiales Gelege
- 304: Bevorratung
- 305: Bevorratung
- 306: Wickelebene
- 307: Seitenkante
- 308: Seitenkante
- 309: kurze Flanke
- 310: Abzugsrichtung
- 311: lange Flanke
- 312: Ort-Zeit-Diagramm
- 313: Geschwindigkeitsdiagramm

## Patentansprüche

1. Verfahren zur Herstellung eines multiaxialen Geleges (301), bevorzugt aus Kohlefaserstoffen, in welchem ein monoaxiales Gelege (302, 303) von mindestens einer Bevorratung (304, 305) um eine Wickelebene (306) gewickelt wird, wobei die Wickelebene (306) und die mindestens eine Bevorratung (304, 305) umeinander rotieren, um das monoaxiale Gelege (302, 303) um die Wickelebene (306) zu wickeln,
**gekennzeichnet durch**
die Verwendung eines Vibrationsantriebes, der die Wickelebene (306) in mechanische Schwingung versetzt.

2. Verfahren nach Anspruch 1,
**gekennzeichnet durch**
die Verwendung eines Vibrationsantriebes, der mechanische Schwingungen mit im wesentlichen sägezahnartigen Charakter in Bezug auf das Ort-Zeit-Diagramm erzeugt, wobei die steilere Flanke (309) der Schwingungsbewegung gegen die Richtung der Abzugsrichtung (310) des Geleges (301) gerichtet ist und die weniger steile Flanke (311) der Schwingungsbewegung in Richtung der Abzugsrichtung (310) des Geleges (301) gerichtet ist.

3. Verfahren nach einem der Ansprüche 1 und 2,
**gekennzeichnet durch**
eine Oberfläche auf der Wickelebene (306), die in Verbindung mit den zu wickelnden Fasern des monoaxialen Geleges (302, 303) **durch** Feinstrukturierung einen definierten Reibungswiderstand der Fasern des Geleges (301, 302, 303) auf der Wickelebene (306) erzeugt.

4. Verfahren nach einem der Ansprüche 1 bis 3,
**gekennzeichnet durch**
eine Vortriebsgeschwindigkeit der Fasern des Geleges (301) auf der Wickelebene (306) **durch** den Vibrationsantrieb, der mit der relativen Umdrehungsgeschwindigkeit der Bevorratungen (304, 305) um die Wickelebene (306) synchronisiert ist, wobei während der Zeit einer halben Umdrehung der Bevorratungen (304, 305) in Relation zur Wickelebene (306), das Gelege (301) um den Tangens des Wickelwinkels (α), der zwischen der Ausrichtung der Seitenkanten (307, 308) der Wickelebene (306) und der Ausrichtung der fasern des monoaxialen Geleges (302, 303) gemessen wird, multipliziert mit der Breite der Wickelebene (306) vorgetrieben wird.

5. Verfahren nach Anspruch 4,
**gekennzeichnet durch**
eine Variation der Vortriebsgeschwindigkeit **durch** den Vibrationsantrieb während einer relativen Umdrehung der mindestens einen Bevorratung (304, 305) um die Wickelebene (306), wobei die Vortriebsgeschwindigkeit an den Tangens des Wickelwinkels (α), der zwischen der Ausrichtung der Seitenkanten (307, 308) der Wickelebene (306) gemessen wird, multipliziert mit der Breite der Wickelebene (306) pro viertel Umdrehung der Wickelebene (306) angepasst ist, wenn die Fasern des monoaxialen Geleges (302, 303) **durch** eine Seitenkante (307, 308) der Wickelebene (306) gespannt sind und auf eine Fläche der Wickelebene (306) gewickelt werden und an den Tangens des Wickelwinkels (α), der zwischen der Ausrichtung der Seitenkanten (307, 308) der Wickelebene (306) gemessen wird, multipliziert mit der Stärke der Wickelebene (306) pro viertel Umdrehung der Wickelebene (306) angepasst ist, wenn die Fasern des monoaxialen Geleges (302, 303) **durch** eine Seitenkante (307, 308) der Wickelebene (306) gespannt sind und auf eine Seitenkante (307, 308) der Wickelebene (306) gewickelt werden.

6. Verfahren nach einem der Ansprüche 1 bis 5,
**gekennzeichnet durch**
eine Frequenz der Schwingung von 1 Hz bis 500 Hz, bevorzugt 2 Hz bis 100 Hz, besonders bevorzugt von 3 Hz bis 50 Hz, ganz besonders bevorzugt von 5 Hz bis 50 Hz.

7. Verfahren nach einem der Ansprüche 1 bis 6,
**gekennzeichnet durch**
eine Amplitude der Schwingung von 0,001 cm bis 10 cm, bevorzugt von 0,01 cm bis 5 cm, besonders bevorzugt von 0,1 cm bis 1 cm, ganz besonders bevorzugt von 0,2 cm bis 0,5 cm.

8. Vorrichtung zur Durchführung des Verfahrens nach einem der Ansprüche 1 bis 7, zur Herstellung eines multiaxialen Geleges (301), bevorzugt aus Kohlefasern, aufweisend mindestens eine Bevorratung (304, 305) für ein monoaxiales Gelege (302, 303) und eine Wickelebene (306), wobei die mindestens eine Bevorratung (304, 305) und die Wickelebene (306) umeinander rotieren und dabei das monoaxiale Gelege (302, 303) von der mindestens einen Bevorratung (304, 305) um die Wickelebene (306) wickeln,
**dadurch gekennzeichnet,**
**dass** ein Vibrationsantrieb die Wickelebene (306) parallel zur Richtung der Seitenkanten (307, 308) in mechanische Schwingung versetzt.

9. Vorrichtung nach Anspruch 8,
**dadurch gekennzeichnet,**
**dass** der Vibrationsantrieb mechanische Schwingungen mit im wesentlichen sägezahnartigen Charakter in Bezug auf das Ort-Zeit-Diagramm erzeugt, wobei die steilere Flanke (309) der Schwingungsbewegung gegen die Richtung der Abzugsrichtung (310) des Geleges (301) gerichtet ist und die weniger steile Flanke (311) der Schwingungsbewegung in Richtung der Abzugsrichtung (310) des Geleges (301) gerichtet ist.

10. Vorrichtung nach einem Ansprüche 8 und 9,
**dadurch gekennzeichnet,**
**dass** die Oberfläche auf der Wickelebene (306) in Verbindung mit den zu wickelnden Fasern des monoaxialen Geleges (302, 303) durch Feinstrukturierung einen definierten Reibungswiderstand der Fasern auf der Wickelebene (306) erzeugt.

11. Vorrichtung nach einem der Ansprüche 8 bis 10,
**dadurch gekennzeichnet,**
**dass** die Vortriebsgeschwindigkeit der Fasern durch den Vibrationsantrieb mit der relativen Umdrehungsgeschwindigkeit der Bevorratungen (304, 305) um die Wickelebene (306) synchronisiert ist, wobei die Vortriebsgeschwindigkeit so gewählt ist, dass während der Zeit einer halben Umdrehung der Bevorratungen (304, 305) in Relation zur Wickelebene (306), das Gelege (301) um den Tangens des Wickelwinkels (α) der zwischen der Ausrichtung der Seitenkanten (307, 308) der Wickelebene (306) gemessen wird, multipliziert mit der Breite der Wickelebene (306) vorgetrieben wird.

12. Vorrichtung nach Anspruch 11,
**dadurch gekennzeichnet,**
**dass** eine Variation der Vortriebsgeschwindigkeit während einer relativen Umdrehung der mindestens einen Bevorratung (304, 305) um die Wickelebene (306) vorgesehen ist, wobei die Vortriebsgeschwindigkeit an den Tangens des Wickelwinkels (α), der zwischen der Ausrichtung der Seitenkanten (307, 308) der Wickelebene (306) gemessen wird, multipliziert mit der Breite der Wickelebene (306) pro viertel Umdrehung der Wickelebene (306) angepasst ist, wenn die Fasern des monoaxialen Geleges (302, 303) durch eine Seitenkante (307, 308) der Wickelebene (306) gespannt sind und auf eine Fläche der Wickelebene (306) gewickelt werden und an den Tangens des Wickelwinkels (α), der zwischen der Ausrichtung der Seitenkanten (307, 308) der Wickelebene (306) gemessen wird, multipliziert mit der Stärke der Wickelebene (306) pro viertel Umdrehung der Wickelebene (306) angepasst ist, wenn die Fasern des monoaxialen Geleges (302, 303) durch eine Seitenkante (307, 308) der Wickelebene (306) gespannt sind und auf eine Seitenkante (307, 308) der Wickelebene (306) gewickelt werden.

13. Vorrichtung nach einem Ansprüche 8 bis 12,
**dadurch gekennzeichnet,**
**dass** die Frequenz der Schwingung 1 Hz bis 500 Hz, bevorzugt 2 Hz bis 100 Hz, besonders bevorzugt von 3 Hz bis 50 Hz, ganz besonders bevorzugt von 5 Hz bis 50 Hz beträgt.

14. Vorrichtung nach einem der Ansprüche 8 bis 13,
**dadurch gekennzeichnet,**
**dass** die Amplitude der Schwingung 0,001 cm bis 10 cm, bevorzugt von 0,01 cm bis 5 cm, besonders bevorzugt von 0,1 cm bis 1 cm, ganz besonders bevorzugt von 0,2 cm bis 0,5 cm beträgt.

## Claims

1. Method for the manufacture of a multiaxial fabric (301) preferably of carbon fibers, in which a monoaxial fabric (302, 303) is wound from at least one storage (304, 305) around a winding plane (306), wherein the winding plane (306) and the at least one storage (304, 305) rotate around each other to wind the monoaxial fabric (302, 303) around the winding plane (306),
**characterized by**
the use of a vibration drive which causes the winding plane (306) to vibrate mechanically.

2. Method according to claim 1,
**characterized by**
the use of a vibration drive which generates mechanical vibrations of an essentially saw-tooth character with respect to the place-time diagram, wherein the steeper edge (309) of the vibration movement is directed against the direction of the drawing-off direction (310) of the fabric, and the less steep edge (311) of the vibration movement is directed in the direction of the drawing-off direction (310) of the fabric (301).

3. Method according to one of claims 1 and 2,
**characterized by**
a surface on the winding plane (306) which generates, by fine structuring, a defined frictional resistance of the fibres of the fabric (301, 302, 303) on the winding plane (306) in connection with the fibres of the monoaxial fabric (302, 303) to be wound.

4. Method according to one of claims 1 to 3,
**characterized by**
an advance speed of the fibres of the fabric (301) on the winding plane (306) by the vibration drive which is synchronized with the relative rotational speed of the storages (304, 305) around the winding plane (306), wherein during the time of half a rotation of the storages (304, 305) in relation to the winding plane (306), the fabric (301) is advanced by the tangent of the winding angle (α) which is measured between the orientation of the side edges (307, 308) of the winding plane (306) and the orientation of the fibres of the monoaxial fabric (302, 303) multiplied by the width of the winding plane (306).

5. Method according to claim 4,
**characterized by**
a variation of the advance speed by the vibration drive during a relative rotation of the at least one storage (304, 305) around the winding plane (306), wherein the advance speed is adapted to the tangent of the winding angle (α) which is measured between the orientation of the side edges (307, 308) of the winding plane (306), multiplied by the width of the winding plane (306) per quarter rotation of the winding plane (306) when the fibres of the monoaxial fabric (302, 303) are tensioned by a side edge (307, 308) of the winding plane (306) and are wound onto a surface of the winding plane (306), and is adapted to the tangent of the winding angle (α) which is measured between the orientation of the side edges (307, 308) of the winding plane (306), multiplied by the thickness of the winding plane (306) per quarter rotation of the winding plane (306) when the fibres of the monoaxial fabric (302, 303) are tensioned by a side edge (307, 308) of the winding plane (306) and are wound onto a side edge (307, 308) of the winding plane (306).

6. Method according to one of claims 1 to 5,
**characterized by**
a frequency of vibration of 1 Hz to 500 Hz, preferably 2 Hz to 100 Hz, particularly preferred 3 Hz to 50 Hz, especially particularly preferred 5 Hz to 50 Hz.

7. Method according to one of claims 1 to 6,
**characterized by**
an amplitude of vibration of 0.001 cm to 10 cm, preferably of 0.01 cm to 5 cm, particularly preferred of 0.1 cm to 1 cm, especially particularly preferred of 0.2 cm to 0.5 cm.

8. Device for carrying out the method according to one of claims 1 to 7 for the manufacture of a multiaxial fabric (301), preferably of carbon fibres, comprising at least one storage (304, 305) for a monoaxial fabric (302, 303) and a winding plane (306), wherein the at least one storage (304, 305) and the winding plane (306) rotate around each other and in the process wind the monoaxial fabric (302, 303) from the at least one storage (304, 305) around the winding plane (306),
**characterized in that**
a vibration drive causes the winding plane (306) to mechanically rotate in parallel to the direction of the side edges (307, 308).

9. Device according to claim 8,
**characterized in that**
the vibration drive generates mechanical vibrations of an essentially saw-tooth character with respect to the place-time diagram, wherein the steeper edge (309) of the vibration movement is directed against the direction of the drawing-off direction (310) of the fabric, and the less steep edge (311) of the vibration movement is directed in the direction of the drawing-off direction (310) of the fabric (301).

10. Device according to one of claims 8 to 9,
**characterized in that**
the surface on the winding plane (306) generates, by fine structuring, a defined frictional resistance of the fibres on the winding plane (306) in connection with the fibres of the monoaxial fabric (302, 303) to be wound.

11. Device according to one of claims 8 to 10,
**characterized in that**
the advance speed of the fibres by the vibration drive is synchronized with the relative rotational speed of the storages (304, 305) around the winding plane (306), wherein the advance speed is selected such that during the time of half a rotation of the storages (304, 305) in relation to the winding plane (306), the fabric (301) is advanced by the tangent of the winding angle (α) which is measured between the orientation of the side edges (307, 308) of the winding plane (306) multiplied by the width of the winding plane (306).

12. Device according to claim 11,
**characterized in that**
a variation of the advance speed during a relative rotation of the at least one storage (304, 305) around the winding plane (306) is provided, wherein the advance speed is adapted to the tangent of the winding angle (α) which is measured between the orientation of the side edges (307, 308) of the winding plane (306), multiplied by the width of the winding plane (306) per quarter rotation of the winding plane (306) when the fibres of the monoaxial fabric (302, 303) are tensioned by a side edge (307, 308) of the winding plane (306) and are wound onto a surface of the winding plane (306), and is adapted to the tangent of the winding angle (α) which is measured between the orientation of the side edges (307, 308) of the winding plane (306), multiplied by the thickness of the winding plane (306) per quarter rotation of the winding plane (306) when the fibres of the monoaxial fabric (302, 303) are tensioned by a side edge (307, 308) of the winding plane (306) and are wound onto a side edge (307, 308) of the winding plane (306).

13. Device according to one of claims 8 to 12,
**characterized in that**
the frequency of vibration is 1 Hz to 500 Hz, preferably 2 Hz to 100 Hz,
particularly preferred 3 Hz to 50 Hz, especially particularly preferred 5 Hz to 50 Hz.

14. Device according to one of claims 8 to 13,
**characterized in that**
the amplitude of vibration is 0.001 cm to 10 cm, preferably 0.01 cm to 5 cm, particularly preferred 0.1 cm to 1 cm, especially particularly preferred 0.2 cm to 0.5 cm.

## Revendications

1. Procédé de fabrication d'une structure multiaxiale (301), préférentiellement constituée de matériaux en fibres de carbone, dans lequel une structure monoaxiale (302, 303) d'au moins un stockage (304, 305) est enroulée autour d'un plan d'enroulement (306), dans lequel le plan d'enroulement (306) et l'au moins un stockage (304, 305) tournent l'un autour de l'autre pour enrouler la structure monoaxiale (302, 303) autour du plan d'enroulement (306),
**caractérisé par**
l'utilisation d'un entraînement vibratoire, qui provoque l'oscillation mécanique du plan d'enroulement (306).

2. Procédé selon la revendication 1,
**caractérisé par**
l'utilisation d'un entraînement vibratoire qui produit des oscillations mécaniques à caractère essentiellement en dents de scie en ce qui concerne le diagramme lieu-temps, le flanc plus abrupt (309) du mouvement d'oscillation étant orienté dans la direction inverse du sens d'extraction (310) de la structure (301) et le flanc moins abrupt (311) du mouvement d'oscillation étant orienté dans la direction du sens d'extraction (310) de la structure (301).

3. Procédé selon l'une des revendications 1 et 2,
**caractérisé par**
une surface sur le plan d'enroulement (306), qui produit par structuration fine, en relation avec les fibres à enrouler de la structure monoaxiale (302, 303), une résistance au frottement définie des fibres de la structure (301, 302, 303) sur le plan d'enroulement (306).

4. Procédé selon l'une des revendications 1 à 3,
**caractérisé par**
une vitesse d'avancement des fibres de la structure (301) sur le plan d'enroulement (306) par l'entraînement vibratoire, qui est synchronisée avec la vitesse de rotation relative des stockages (304, 305) autour du plan d'enroulement (306), la structure (301) étant avancée, pendant la durée d'une demi-rotation des stockages (304, 305) en relation avec le plan d'enroulement (306), de la tangente de l'angle d'enroulement (α), qui est mesuré entre l'orientation des arêtes latérales (307, 308) du plan d'enroulement (306) et l'orientation des fibres de la structure monoaxiale (302, 303), multipliée par la largeur du plan d'enroulement (306).

5. Procédé selon la revendication 4,
**caractérisé par**
une variation de la vitesse d'avancement par l'entraînement vibratoire pendant un rotation relative de l'au moins un stockage (304, 305) autour du plan d'enroulement (306), la vitesse d'avancement étant ajustée à la tangente de l'angle d'enroulement (α), qui est mesuré entre l'orientation des arêtes latérales (307, 308) du plan d'enroulement (306), multipliée par la largeur du plan d'enroulement (306) par quart de tour du plan d'enroulement (306), quand les fibres de la structure monoaxiale (302, 303) sont tendues par une arête latérale (307, 308) du plan d'enroulement (306) et sont enroulées sur une surface du plan d'enroulement (306) et étant ajustée à la tangente de l'angle d'enroulement (α), qui est mesuré entre l'orientation des arêtes latérales (307, 308) du plan d'enroulement (306), multipliée par l'épaisseur du plan d'enroulement (306) par quart de tour du plan d'enroulement (306), quand les fibres de la structure monoaxiale (302, 303) sont tendues par une arête latérale (307, 308) du plan d'enroulement (306) et sont enroulées sur une arête latérale (307, 308) du plan d'enroulement (306).

6. Procédé selon l'une des revendications 1 à 5,
**caractérisé par**
une fréquence de l'oscillation de 1 Hz à 500 Hz, de manière préférentielle de 2 Hz à 100 Hz, de manière particulièrement préférentielle de 3 Hz bis 50 Hz, de manière tout particulièrement préférentielle de 5 Hz à 50 Hz.

7. Procédé selon l'une des revendications 1 à 6,
**caractérisé par**
une amplitude de l'oscillation de 0,001 cm à 10 cm, de manière préférentielle de 0,01 cm à 5 cm, de manière particulièrement préférentielle de 0,1 cm à 1 cm, de manière tout particulièrement préférentielle de 0,2 cm à 0,5 cm.

8. Dispositif destiné à la réalisation du procédé selon l'une des revendications 1 à 7,
pour la fabrication d'une structure multiaxiale (301), préférentiellement constituée de fibres de carbone, présentant au moins un stockage (304, 305) pour une structure monoaxiale (302, 303) et un plan d'enroulement (306), l'au moins un stockage (304, 305) et le plan d'enroulement (306) tournant l'un autour de l'autre et la structure monoaxiale (302, 303) de l'au moins un stockage (304, 305) s'enroulant ainsi autour du plan d'enroulement (306), **caractérisé par le fait qu'**un entraînement vibratoire qui provoque l'oscillation mécanique du plan d'enroulement (306) parallèlement à la direction des arêtes latérales (307, 308).

9. Dispositif selon la revendication 8,
**caractérisé par**
**le fait que** l'entraînement vibratoire produit des oscillations mécaniques à caractère essentiellement en dents de scie en ce qui concerne le diagramme lieu-temps, le flanc plus abrupt (309) du mouvement d'oscillation étant orienté dans la direction inverse du sens d'extraction (310) de la structure (301) et le flanc moins abrupt (311) du mouvement d'oscillation étant orienté dans la direction du sens d'extraction (310) de la structure (301).

10. Dispositif selon l'une des revendications 8 et 9,
**caractérisé par**
**le fait que** la surface sur le plan d'enroulement (306) produit par structuration fine, en relation avec les fibres à enrouler de la structure monoaxiale (302, 303), une résistance au frottement définie des fibres sur le plan d'enroulement (306).

11. Dispositif selon l'une des revendications 8 à 10,
**caractérisé par**
**le fait que** la vitesse d'avancement des fibres par l'entraînement vibratoire est synchronisée avec la vitesse de rotation relative des stockages (304, 305) autour du plan d'enroulement (306), la vitesse d'avancement étant sélectionnée de telle sorte que pendant la période d'une demi-rotation des stockages (304, 305) en relation avec le plan d'enroulement (306), la structure (301) est avancée de la tangente de l'angle d'enroulement (α), qui est mesuré entre l'orientation des arêtes latérales (307, 308) du plan d'enroulement (306), multipliée par la largeur du plan d'enroulement (306).

12. Dispositif selon la revendication 11,
**caractérisé par**
**le fait qu'**une variation de la vitesse d'avancement pendant une rotation relative de l'au moins un stockage (304, 305) est prévue autour du plan d'enroulement (306), la vitesse d'avancement étant ajustée à la tangente de l'angle d'enroulement (α), qui est mesuré entre l'orientation des arêtes latérales (307, 308) du plan d'enroulement (306), multipliée par la largeur du plan d'enroulement (306) par quart de tour du plan d'enroulement (306), quand les fibres de la structure monoaxiale (302, 303) sont tendues par une arête latérale (307, 308) du plan d'enroulement (306) et sont enroulées sur une surface du plan d'enroulement (306) et étant ajustée à la tangente de l'angle d'enroulement (α), qui est mesuré entre l'orientation des arêtes latérales (307, 308) du plan d'enroulement (306), multipliée par l'épaisseur du plan d'enroulement (306) par quart de tour du plan d'enroulement (306), quand les fibres de la structure monoaxiale (302, 303) sont tendues par une arête latérale (307, 308) du plan d'enroulement (306) et sont enroulées sur une arête latérale (307, 308) du plan d'enroulement (306).

13. Dispositif selon l'une des revendications 8 à 12,
**caractérisé par**
**le fait que** la fréquence de l'oscillation est de 1 Hz à 500 Hz, de manière préférentielle de 2 Hz à 100 Hz, de manière particulièrement préférentielle de 3 Hz à 50 Hz, de manière tout particulièrement préférentielle de 5 Hz à 50 Hz.

14. Dispositif selon l'une des revendications 8 à 13,
**caractérisé par**
**le fait que** l'amplitude de l'oscillation est de 0,001 cm à 10 cm, de manière préférentielle de 0,01 cm à 5 cm, de manière particulièrement préférentielle de 0,1 cm à 1 cm, de manière tout particulièrement préférentielle de 0,2 cm à 0,5 cm.
